# EUROPEAN PATENT APPLICATION

(11) **EP 0 541 490 A1**
(43) Date of publication of application: **12.05.1993**
(21) Application number: 92810844.8
(22) Date of filing: 03.11.1992
(51) Int. Cl.: C08F 20/60, C08F 8/44, D21H 17/37, D21H 17/45

(54) **Catonic polymers**

(30) Priority: 07.11.1991 GB 9123683
(71) Applicant: SANDOZ LTD., CH-4002 Basel (CH); SANDOZ-ERFINDUNGEN Verwaltungsgesellschaft m.b.H., A-1235 Wien (AT)
(72) Inventor: Coates, Jacqueline Anne, Leeds LS6 4QE (GB); Dalley, Mark Gordon, Bradford BD12 9JL (GB)

(57) **Abstract**

A cationic polymer useful as an additive in paper-making processes comprises at least one moiety of the formula I 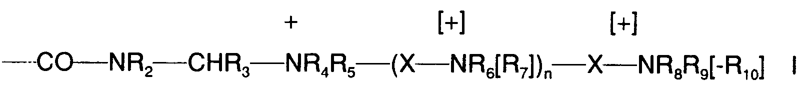
wherein
R₂ is selected from hydrogen and R₄;
R₃ is selected from hydrogen and C₁-C₃ alkyl;
the groups R₄ and R₅ are independently selected from C₁-C₆ alkyl, cycloalkyl, C₂-C₆ alkenyl, aryl and aralkyl, these being optionally substituted with at least one group which is selected from C₁-C₆ hydroxyalkyl, C₁-C₆ aminoalkyl, C₁-C₆ sulphoalkyl and C₁-C₆ carboxyalkyl, carboxy, and sulpho groups, where present, being in either acid or salt form, or the groups R₄ and R₅ together with the nitrogen atom to which they are attached form a heterocyclic ring which may optionally comprise other heterocyclic atoms;
R₆, R₈, R₉ and, where present, R₇ and R₁₀ are independently selected from hydrogen, a hydrocarbon radical having from 1 to 8 carbon atoms and being bonded to the nitrogen atom through an aliphatic carbon atom on this radical, a radical having a sequence of from 4 to 8 carbon atoms which sequence is interrupted by -O- or -NR₁₁-, with the proviso that a maximum of one of R₈, R₉, R₁₀ shall contain a moiety -NR₁₁-, R₁₁ being selected from hydrogen, methyl, ethyl and a group of the formula 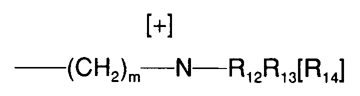
wherein R₁₂, R₁₃ and, where present, R₁₄ are independently selected from hydrogen, methyl and ethyl, or R₁₂ and R₁₃ together with the nitrogen atom to which they are attached form an aliphatic heterocycle with from 4 to 5 carbon atoms, and m is an integer from 1-3; X is selected from C₃-C₆ alkylene, C₁-C₆ hydroxyalkylene and C₄-C₆ alkylene interrupted by -0-; and n is an integer of from 0 to 20.

## Description

This invention relates to novel cationic polymers, to a method of making such polymers and to their use.

Certain cationic polymers are known to be useful as flocculation agents and have been used in such applications as water purification and in the manufacture of paper. For example, certain copolymers useful in this function are described in European Published Application 0 323 847.

This invention provides novel cationic polymers which comprise moieties of the general formula I 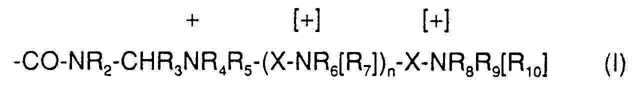
wherein
R₂ is selected from hydrogen and R₄;
R₃ is selected from hydrogen and C₁-C₃ alkyl;
the groups R₄ and R₅ are independently selected from C₁₋₆alkyl, cycloalkyl, C₂₋₆ alkenyl,aryl and aralkyl, these being optionally substituted with at least one group which is selected from C₁₋₆ hydroxyalkyl, C₁₋₆ aminoalkyl, C₁₋₆ sulphoalkyl and C₁₋₆ carboxyalkyl, carboxy, and sulpho groups, where present, being in either acid or salt form, or the groups R₄ and R₅ together with the nitrogen atom to which they are attached form a heterocyclic ring which may optionally comprise other heterocyclic atoms;
R₆, R₈, R₉ and, where present, R₇ and R₁₀ are independently selected from hydrogen, a hydrocarbon radical having from 1 to 8 carbon atoms and being bonded to the nitrogen atom through an aliphatic carbon atom on this radical, a radical having a sequence of from 4 to 8 carbon atoms which sequence is interrupted by -O- or -NR₁₁-, with the proviso that a maximum of one of R₈, R₉, R₁₀ shall contain a moiety -NR₁₁-, R₁₁ being selected from hydrogen, methyl, ethyl and a group of the formula 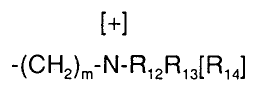
wherein R₁₂, R₁₃ and, where present, R₁₄ are independently selected from hydrogen, methyl and ethyl, or R₁₂ and R₁₃ together with the nitrogen atom to which they are attached form an aliphatic heterocycle with from 4 to 5 carbon atoms, and m is an integer from 1-3; X is selected from C₁-C₆ alkylene, C₃-C₆ hydroxyalkylene and C₄-C₆ alkylene interrupted by -O-; and n is an integer of from 0 to 20.

It will be understood that when a moiety R₇, R₁₀ or R₁₄ is present, the nitrogen atom with which it is associated will be in quaternary ammonium form, whereas when R₇, R₁₀ or R₁₄ is absent, the relevant nitrogen atom will be in normal trivalent form.

In a preferred embodiment of the invention,

R₂ is selected from hydrogen, methyl, ethyl and hydroxyethyl; R₃ is hydrogen; the groups R₄ and R₅ are independently selected from methyl, ethyl, propyl, butyl, hydroxyethyl, allyl, and ethylene sulphonic acid or are combined with the nitrogen ring to which they are attached to form a heterocyclic ring selected from piperidine, morpholine and pyrrolidine;
X is C₃₋₆hydroxyalkylene and R₆ is selected from hydrogen and C₁-C₄ alkyl; and n is 0.

In a more preferred embodiment of the invention, R₂ is hydrogen; the groups R₄, R₅, R₆, R₈, R₉ and where present, R₇ and R₁₀ are independently selected from methyl and ethyl; and X is C₃ hydroxyalkylene.

The polymers to which the moieties hereinabove described are attached to give the cationic polymers of the invention may be selected from any suitable polymers known to the art The polymer may, for example, be a condensation polymer Examples of such polymers include polyester, polyurethane, polyamide and epoxy resins. The polymers will either have the moieties as a result of their being present on one of the monomers which takes part in the condensation polymerisation reaction, or as a result of there being present on one of the monomers a reactive group to which such a moiety can be added or which is capable of modification to give such a moiety Other examples of polymers which have been found to be very useful are the polysaccharides, such as starch, cellulose, chitosan, guar gums and their derivatives If the chosen polymer lacks amide groups these can be added thereto by art-recognised methods.

Such polymers may be modified by the attachment thereto of other groups. One especially valuable type of group is the polyoxyalkylene chain Such groups generally are either completely made up of oxyethylene units or comprise a high proportion of such units These can alter the water solubility characteristics of the polymer and allow it to be tailored to suit particular circumstances.

In a preferred embodiment of the invention, the polymers are addition polymers, that is, polymers produced by the free radical polymerisation of ethylenically unsaturated, preferably α,β-ethylenically unsaturated, monomer. The addition polymers for use in this invention may be homopolymers or copolymers They may be provided either by using a monomer comprising the necessary moiety in the polymerisation, or by taking a polymer with suitable reactive groups and attaching a suitable species thereto The latter procedure is especially useful because the polymer may be a relatively inexpensive useful because the polymer may be a relatively inexpensive acrylamide polymer Especially useful polymers are homopolymers of acrylamide, but other monomers such as methacrylamide, ethacrylamide, N-methylmethacrylamide, and N-hydroxyethylacryl-amide may be used.

An interesting and useful group of polymers comprise both polysaccharide and addition polymer segments. A typical example of such a polymer may be prepared by the reaction of starch with acrylamide, followed by the addition graft polymerization of further acrylamide.

The molecular weight of the polymer may be selected from a very wide range and it is dependent on the basic polymer type used and the end use to which the polymer is to be put. For example, when the polymer is to be used as a conditioning aid, a molecular weight of from 1,000 to 200,000 is typical. However, if the polymer is to be used as a drainage aid, the molecular weight range is from 50,000 to 10,000,000.

A moiety as hereinabove described may be prepared by any suitable means known to the art, but an especially advantageous way is by means of a Mannich reaction. This can be carried out either on a polymer having appropriate reactive groups or on a suitable monomer prior to its polymerisation. The invention therefore provides a process for the preparation of a polymer having moieties of the formula I, comprising the Mannich reaction of amide groups on a monomer or polymer with an aldehyde and a secondary amine followed by the quaternisation of the Mannich reaction product.

The Mannich reaction is a well-known reaction of carbonyl compounds and is described in the general organic chemistry literature.

When the Mannich reaction is performed on a monomer, the next step will be the formation of a polymer. Alternatively, a polymer comprising amide groups may first be formed, and these may then be subjected to the Mannich reaction.

In particular, the invention provides a process for the preparation of an addition polymer having monomer units with a moiety of the formula I, comprising subjecting an addition polymerisable monomer of the formula II 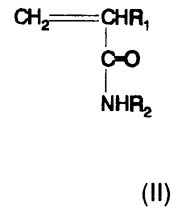
where R₁ is selected from hydrogen, C₁₋₆alkyl and cycloalkyl, to a Mannich reaction with an aldehyde of formula R₃CHO and a secondary amine of the formula NR₄R₅H, followed by the quaternisation reaction of the Mannich reaction product and the addition polymerisation of the thus-modified monomer to give the polymer Preferably, the monomer II will be the only monomer present and the result will be a homopolymer.

It is preferred that the aldehyde be selected from formaldehyde, acetaldehyde and propionaldehyde, most preferably formaldehyde It is also preferred that the amine NR₄R₅H be selected from the group consisting of dimethylamine, methylethylamine, hydroxyethylmethylamine, dibutylamine, piperidine, morpholine, pyrrolidine, diethanolamine, diallylamine, N-methyl-aminoethane sulfonic acid, and 2-aminopropionitrile. The most preferred amines are the dialkylamines such as diethylamine and dimethylamine.

When the Mannich reaction has been carried out, the resulting monomer or monomer unit will have the side chain shown in formula III

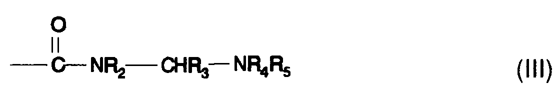

The nitrogen at the end of this side chain may then be quaternised before or after polymerisation to give polymers with moieties of the formula I. This can be achieved by a number of different methods, the preferred method being the reaction with a compound of the general formulae IV and/or V 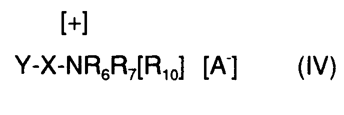 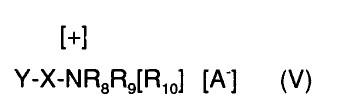
wherein Y is halogen, and X, is as hereinabove defined, or X and Y together comprise a group of the formula Z-X'- where Z is an oxirane ring and X' is C₁₋₆ alkylene, R₆, R₇, R₈, R₉ and, when present, R₁₀ have the significances referred to hereinabove and A, when present, is an anion. The halogen is preferably chlorine or bromine. The anion A may be any suitable anion, halide and methyl sulphate being preferred. Compounds IV and V may be different, or more commonly, they may be identical. In place of the oxirane ring-containing compound, there may be used a secondary amine and a compound containing both a halogen or an oxirane ring, e.g. epichlorohydrin.

The Mannich reaction is carried out in a conventional manner, with the addition of the aldehyde and the amine in equimolar amounts. Instead of aldehyde, it is possible to add a compound which will generate a suitable aldehyde. Such compounds include paraformaldehyde, formalin and trioxymethane. The reaction is carried out at a temperature of from 20° to 100°C, preferably from 40° to 80°C over a period of from 30 minutes to 10 hours, preferably from 1 to 3 hours.

To this mixture is added the quaternising agent of formula IV/V. The reaction conditions are typically a temperature of from 40° to 100°C (preferably 40° to 70°C), a pH of between 7 and 14 (preferably 7 and 10) and a reaction time of between 30 minutes and 2 hours (preferably between 30 minutes and 1 hour). Finally, the pH is adjusted with mineral acid to between 1 and 4, preferably between 1 and 3. If it is desired that the terminal nitrogen of the moiety 1 be quaternised, this may be added by means of a separate quaternising agent, for example, dimethylsulphate.

There are alternative routes for preparing polymers according to the invention, these being less preferred than that just described but nevertheless very useful. For example, the monomer or polymer with the side chain shown in formula III may be reacted with epichlorhydrin and a secondary amine. This will give a moiety of the general formula I in which X is -CH₂CH(OH)CH₂-. In another route, an amide group-bearing monomer or polymer is sequentially reacted with formaldehyde, a compound of formula IV/V and a secondary amine.

The Mannich reaction has unique advantages. The major advantage is that the product of this reaction has charges spread evenly along the polymer backbone. This is in contrast, for example, to the copolymers of EP-A-0323847 where the tendency is to form block copolymers. A further advantage manifests itself in the actual polymer preparation. The prior art, for example, EP-A-0323847, often requires careful control over viscosity during polymerisation. The Mannich process hereinabove described requires no such viscosity control.

The lengths of the moieties (the number n) may be controlled by the selection of the quantity of quaternising agent and amine. During the reaction, these substances will react to extend the lengths of the moieties until no further reactants remain.

The polymers of this invention have a number of uses, especially in the paper industry in which they can be used as additives, for example, as flocculating agents, fixing agents, drainage agents and retention agents. In addition, they may be used as flocculating agents in other areas such as mineral processing and waste water treatment. In addition to performance characteristics which are as good as or better than those of art-recognized materials, they have the considerable advantage that they can be made from relatively cheap raw materials and they therefore offer a considerably economic advantage. In addition, those polymers which comprise starch have the advantage of utilising a raw material derived from a renewable resource, one moreover which is biodegradable and which therefore confers a degree of biodegradability on the polymers.

The quantity of cationic polymer according to this invention used in commercial compositions depends on the nature of the composition and the use to which it will be put. The determination of an appropriate quantity is within the skill of the art in each case For example, for use with paper pulp, typical concentrations are 0.005-005%, preferably 0.01-0.03% by weight of pulp. In the commercial compositions into which they are incorporated, the polymers of this invention may be combined with other known ingredients used in art-recognised quantities, for example, dyestuffs, pigments and fillers, antifoams and surfactants. An especially useful additive which will be beneficial in most commercial systems is a stabiliser. Such stabiliser may be chosen from the wide range known to the art, for example, those disclosed in GB 1,535,949.

The invention is now further described with reference to the following examples in which all parts are expressed by weight.

### Example 1

42 pts acrylamide monomer, 958 pts water and 0.25 pts diethylene triamine pentaacetic acid sodium salt (40% aqueous) are mixed and adjusted to pH 3 with 36% hydrochloric acid This mixture is degassed with nitrogen for 1 hour. It is then warmed to 40°C and 2 pts potassium persulphate are added. The temperature is maintained at 40°C for 3 hours. During this stage a nitrogen blanket is kept over the mixture. 45.4 pts formaldehyde (36% aqeous), 3.5 pts trisodium phosphate and 950.2 pts water are then charged and the mixture is warmed to 60°C and maintained there at 60°C for 1 hour. The temperature is raised to 70°C and 54.2 pts dimethylamine (58% aqueous) is added and the mixture maintained at 70°C for 1 hour. With the temperature at 70°C, 105.4 pts epichlorohydrin, and 108.3 pts dimethylamine (58% aqueous) are added through an inline mixer which prevents lumps forming during the reaction. After the addition the mixture is maintained at 70°C for 1 hour. The temperature is reduced to 20°C and the pH of the mixture adjusted to pH 1-3 with 87.8 pts 36% hydrochloric acid.

The product is a pale yellow viscous solution with a Brookfield RVT viscosity of 2000 cps (20°C, spindle 5, 100 rpm)

### Example 2

This example describes the production of polyacrylamide solution suitable for use in further examples.

50pts acrylamide monomer, 950 pts water and 0.25pts diethylenetriamine pentaacetic acid sodium salt (40% aqueous) are charged to a reaction vessel and the mixture adjusted to pH 3.0 with 36% hydrochloric acid. After degassing with nitrogen for 1 hour, the mixture is warmed to 40°C and 3.5 pts propan-2-ol and 2.0 pts potassium persulphate are added. This mixture is maintained at 40°C for 3 hours under gentle nitrogen flow.

The polymer is a clear solution with a Brookfield RVT viscosity of 3000 cps (20°C, spindle 5, 100 rpm).

### Examples 3-6

Preparation of polymers according to the invention. The materials used are as follows:

| | Example no: (parts by wt.) | | | |
|---|---|---|---|---|
| | 3 | 4 | 5 | 6 |
| Polyacrylamide prepared using example 2. | 1102 | 762 | 582 | 478 |
| Water | 786.2 | 1088 | 1241.5 | 1318 |
| Trisodium phosphate | 3.5 | 3.5 | 3.5 | 3.5 |
| Formaldehyde (36% aqueous) | 16.2 | 22.4 | 25.6 | 27.6 |
| Dimethylamine addition 1 (60% aqueous) | 16.1 | 22.1 | 25.3 | 30.6 |
| Epichlorohydrin | 17.9 | 24.8 | 28.4 | 30.5 |
| Dimethylamine addition 2 (60% aqueous) | 14.5 | 20.1 | 23.0 | 27.6 |
| Hydrochloric acid (36% aqueous) | 13.6 | 27.1 | 40.7 | 54.2 |

The polyacrylamide and water are mixed and the trisodium phosphate and the formaldehyde are added. The mixture is heated to 60°C for 1 hour, and dimethylamine (additon 1) is then added and the mixture heated to 70°C for 1 hour. The mixture is cooled and dimethylamine (addition 2) is added followed by epichlorohydrin. The temperature is maintained at 20-25°C for 30 minutes. The mixture is then heated to 80°C for 1 hour and cooled to 20°C. Hydrochloric acid is added to give a pH of 1 - 3.

The resulting polymers are pale yellow viscous solutions with Brookfield RVT viscosities of 1000-2000 cps (20°C, spindle 5, 100 rpm).

### Example 7

Example 4 is repeated, except that, after the heating of the mixture to 80°C for 1 hour, 41.58 gms of dimethylsulphate is added. The mixture is stirred at 80°C for a further 2 hours and then cooled to 20°C. Sufficient HCl is added to adjust the pH to 1-3.

The product is a pale yellow viscous solution with a vicosity of 3000 cps (20°C, spindle 5, 100 rpm).

### Example 8-12

| Material | Example No. | | | | |
|---|---|---|---|---|---|
| | 8 | 9 | 10 | 11 | 12 |
| Polyacrylamide (60% solution from Ex. 2) | 478 | 478 | 478 | 478 | 478 |
| Water | 1243.6 | 1431.6 | 1431.6 | 1243.6 | 1951 |
| Trisodium Phosphate | 3.5 | 3.5 | 3.5 | 3.5 | 3.5 |
| Formaldehyde (36% aqueous solution) | 27.6 | 27.6 | 27.6 | 27.6 | 27.6 |
| Quaternising agent | 78.7 | 94.94 | 94.94 | 78.1 | 97.88 |
| Dimethylamine (60% aqueous solution) | 27.6 | 27.6 | 27.6 | 27.6 | 27.6 |
| Dimethyl sulphate | -- | -- | 41.58 | 41.58 | -- |

The quaternising agents used in the various examples are:
- Example 8: 2-chloroethylamine hydrochloride (60% aqueous solution)
- Example 9: dimethylaminoethyl chloride hydrochloride (50% aqueous solution).
- Example 10: dimethylaminoethyl chloride hydrochloride (50% aqueous solution).
- Example 11: 2-chloroethylamine hydrochloride (60% aqueous solution)
- Example 12: 3-chloro-2-hydroxypropyltrimethyl ammonium chloride (65% aqueous solution).

The polyacrylamide solution and water are mixed, the trisodium phosphate and formaldehyde are added and the mixture is heated to 60°C for 1 hour. The quaternising agent is then added and the mixture heated to 70°C and maintained there for 1 hour. The dimethylamine is added and the mixture maintained at 70°C for a further hour. In the case of Examples 8, 9 and 12, the mixture is cooled to 25°C and adjusted to pH 1-3 with 36% hydrochloric acid. In the case of Examples 9 and 10, the dimethyl sulphate is added, the mixture is stirred for a further hour at 80°C and then the cooling and pH adjustment as for Examples 8, 9 and 12 is performed.

In each case, the product is a pale yellow viscous liquid with a viscosity in the range 1000-2000 cps (20°, spindle 5, 100 rpm).

### Example 13

573.7 pts of polyacrylamide prepared in example 2 is charged. To this is added 45.4 pts formaldehyde (39% aqueous), 3.5 pts trisodium phosphate and 1195.1 pts water. The mixture is heated to 60°C and mainatined at 60°C for 1 hour. The temperature is then increased to 70°C and 54.2 pts dimethylamine (58% aqueous) is added. The temperature is maintained at 70°C for 1 hour. To this is then added 94.4 pts of glycidyltrimethylammmonium chloride and the temperature is maintained at 70°C for a further hour. The mixture is then cooled to 20°C and adjusted to pH 1 -3 with 36% hydrochloric acid.

The product is a pale yellow viscous solution with a viscosity of 3000 cps (20°, spindle 5, 100 rpm).

### Example 14

Use of a polymer according to the invention as a drainage aid in paper manufacture.

A 1 % furnish of waste paper in water was prepared by pulping 200 parts cardboard and 200 parts newsprint in 20,000 parts of water. To 1000 parts samples of this furnish, varying amounts of the polymer of example 1 were added and the time for 700 parts of water to drain from the furnish through a suitable mesh was recorded. A polymer of Example 1 of EP-A-0323847 and "Polymin" SK (23% polymer content) manufactured by BASF are subjected to the same procedure. 1 part of each polymer solution was diluted with 19 parts of water. Varying amounts between 1 and 4 parts of these solutions are added to 1000mls of furnish and timed through the mesh.

The results were as follows with time taken (in seconds) shown in the body of the table :

| Product: | Parts dilute product added | | | |
|---|---|---|---|---|
| | 1 | 2 | 3 | 4 |
| Polymer from EP-A-0323847 | 60 | 39 | 23 | 16 |
| "Polymin" SK | 61 | 45 | 35 | 35 |
| Example 1 | 60 | 38 | 23 | 17 |

The results show improved drainage over "Polymin" SK and equivalent performance to the polymer of EP-A-0323847. However, the polymer of the invention gives this result at only 9% solids, as opposed to the 20% of the comparisons.

### Example 15

### Use of a polysaccharide

161 parts of wheat starch powder, 72 parts of acrylamide and 560 parts of water is blended and the pH of the blend raised to 12-12.5 with 30% sodium hydroxide solution. The blend is stirred for two hours at 60°C while compressed air is passed through it. The blend is then cooled and the pH adjusted with acetic acid. 3.5 parts of trisodium orthophosphate and 80 parts of 36% formaldehyde in water is then added and mixed in thoroughly. The mixture is heated to 60°C and maintained at that temperature for 1 hour. At the end of this period, 75 parts of 60% dimethylamine in water is added, the temperature is raised to 70°C and maintained there for 1 hour. Over this hour, 92 parts of epichlorhydrin and 75 parts 60% dimethylamine is added. The temperature is maintained at 70°C for a further hour after the addition is complete. The mixture is then cooled to 25°C and the pH adjusted to 3 with 36% hydrochloric acid in water.

The product is a viscous pale yellow liquid with a viscosity of 2000 cps (20°, spindle 5, 100 rpm).

### Example 16

### Example of a graft starch/acrylamide polymer

14.2 parts acrylamide monomer, 41.3 parts water and 3.5 parts maize starch are mixed and adjusted to pH 11.5 with sodium hydroxide solution. The mixture is stirred at 65°C for 2 hours, then cooled and adjusted to pH 7.0 with acetic acid. To this mixture is added 531 parts water, 0.15 parts diethylene triamine pentacetic acid sodium salt (40% aqueous). These are mixed and adjusted to pH 3.5 with 36% hydrochloric acid solution. The mixture is degassed with nitrogen for 1 hour and then warmed to 40°C and 0.12 parts potassium persulphate is added. The solution is maintained at 40°C for 3 hours. During this stage a nitrogen blanket is maintained over the reaction mass. To this mixture is then added 216.7 parts water, 2.5 parts trisodium phosphate and 19.3 parts formaldehyde (38% aqueous): The mixture is heated to 60°C for 1 hour. The temperature is raised to 70°C and 22.4 parts dimethylamine (60% aqueous) is added. The mixture is maintained at 70°C for 1 hour. With the temperature at 70°C, 21.8 parts epichlorohydrin and 22.4 parts dimethylamine (60% aqueous) are added over 30 minutes to the stirred reaction mass. After this addition the mixture is maintained at 70°C for 1 hour. The temperature is reduced to 20°C and the pH of the mixture adjusted to pH 1-3 with 87.8 parts (36% aqueous) hydrochloric acid.

The product is a pale yellow viscous solution with a Brookfield RVT viscosity of 1000 cps. (Spindle 5, 100 rpm, 20°C).

## Claims

1. A cationic polymer which comprises at least one moiety of the formula I 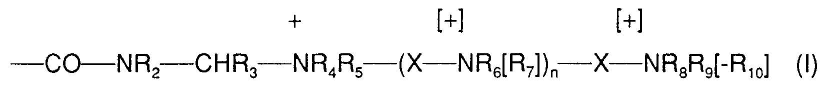 wherein R₂ is selected from hydrogen and R₄; R₃ is selected from hydrogen and C₁-C₃alkyl; the groups R₄ and R₅ are independently selected from C₁-C₆alkyl, cycloalkyl, C₂-C₆alkenyl, aryl and aralkyl, these being optionally substituted with at least one group which is selected from C₁-C₆ hydroxyalkyl, C₁-C₆ aminoalkyl, C₁-C₆ sulphoalkyl and C₁-C₆ carboxyalkyl, carboxy, and sulpho groups, where present, being in either acid or salt form, or the groups R₄ and R₅ together with the nitrogen atom to which they are attached form a heterocyclic ring which may optionally comprise other heterocyclic atoms;
R₆, R₈, R₉ and, where present, R₇ and R₁₀ are independently selected from hydrogen, a hydrocarbon radical having from 1 to 8 carbon atoms and being bonded to the nitrogen atom through an aliphatic carbon atom on this radical, a radical having a sequence of from 4 to 8 carbon atoms which sequence is interrupted by -O- or -NR₁₁-, with the proviso that a maximum of one of R₈, R₉, R₁₀ shall contain a moiety -NR₁₁-, R₁₁ being selected from hydrogen, methyl, ethyl and a group of the formula 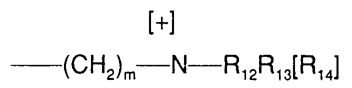 wherein
R₁₂, R₁₃ and, where present, R₁₄ are independently selected from hydrogen, methyl and ethyl, or R₁₂ and R₁₃ together with the nitrogen atom to which they are attached form an aliphatic heterocycle with from 4 to 5 carbon atoms, and m is an integer from 1 -3; X is selected from C₁-C₆alkylene, C₃₋₆hydroxyalkylene and C₄-C₆alkylene interrupted by -0-; and n is an integer of from 0 to 20.

2. A cationic polymer according to claim 1, wherein R₂ is selected from hydrogen, methyl, ethyl and hydroxyethyl; R₃ is hydrogen; the groups R₄ and R₅ are independently selected from methyl, ethyl, propyl, butyl, hydroxyethyl, allyl and ethylene sulphonic acid or are combined with the nitrogen ring to which they are attached to form a heterocyclic ring selected from piperidine, morpholine and pyrrolidine; X is C₃₋₆ hydroxyalkylene and R₆ is selected from hydrogen and C₁-C₄alkyl; and n is 0.

3. A cationic polymer according to claim 1 or claim 2, wherein R₂ is hydrogen; the groups R₄, R₅, R₆ R₈, R₉ and, when present, R₇ and R₁₀ are independently selected from methyl and ethyl.

4. A cationic polymer according to any one of claims 1-3, wherein the polymer to which the moiety of formula (I) is attached is an addition polymer.

5. A cationic polymer according to claim 4, wherein the addition polymer is an acrylamide polymer.

6. A cationic polymer according to any one of claims 1-3, wherein the polymer comprises both polysaccharide and addition polymer segments.

7. A process for the preparation of a cationic polymer according to claim 1, comprising the Mannich reaction of amide groups on a monomer or a polymer with an aldehyde and a secondary amine, followed by the quaternisation of the Mannich reaction product.

8. A process for the preparation of a cationic polymer according to claim 7, comprising subjecting an addition polymerisable monomer of the formula II 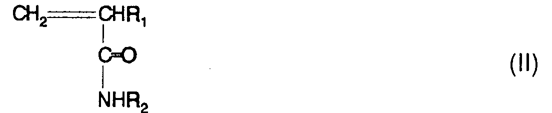 where R₁ is selected from hydrogen, C₁₋₆alkyl and cycloalkyl, to a Mannich reaction with an aldehyde of formula R₃CHO and a secondary amine of the formula NR₄R₅H, followed by the quaternisation reaction of the Mannich reaction product and the addition polymerisation of the thus-modified monomer to give the polymer.

9. A composition adapted to be used in the manufacture of paper, comprising a cationic polymer according to claim 1.

10. A composition according to claim 8, wherein the composition additionally comprises a stabiliser.

11. A process of manufacturing paper comprising the use therein of a cationic polymer according to claim 1.
